# EUROPÄISCHE PATENTSCHRIFT

(11) **EP 0 625 438 B1**
(45) Veröffentlichungstag und Bekanntmachung des Hinweises auf die Patenterteilung: **03.09.1997**
(21) Anmeldenummer: 94107803.2
(22) Anmeldetag: 19.05.1994
(51) Int. Cl.: B60C 27/08

(54) **Stegglied für Reifenkette**
Stud link for tyre chains
Maillon à étai pour chaînes de pneu

(30) Priorität: 20.05.1993 IT TO930348
(43) Veröffentlichungstag der Anmeldung: 23.11.1994
(73) Patentinhaber: ACCIAIERIE WEISSENFELS S.P.A., I-33010 Fusine Valromana (IT)
(72) Erfinder: Pittino, Gianni, I-33010 Fusine Valromana (Tarvisio) (IT)
(74) Vertreter: Geyer, Werner

(56) Entgegenhaltungen:
- DE-U- 8 903 692
- GB-A- 179 861
- US-A- 1 519 834

## Beschreibung

Die Erfindung bezieht sich auf ein Stegglied für Reifenketten, mit einem Gliedkörper, der mindestens eine Aufnahmeöffnung zum Anschluß von Verbindungsgliedern aufweist und auf seiner der Reifenanlagefläche abgewandten Seite mit in Längsrichtung des Steggliedes hintereinanderliegenden Profilerhebungen versehen ist, die an ihren einander zugewandten Seiten jeweils von quer zur Längsrichtung des Steggliedes ausgerichteten, schrägen Flankenflächen begrenzt werden, wobei die Flankenflächen einander zugewandter Seiten aufeinanderfolgender Profilerhebungen jeweils in Richtung von der Reifenanlagefläche weg divergieren.

Aus der DE-C-37 19 751 ist ein Stegglied bekannt, bei dem auf seiner der Reifenanlagefläche abgewandten, bodenseitigen Aufstandsfläche entlang der Längsachse im Querschnitt kreisförmige Vertiefungen eingelassen und gleichzeitig auch an den Seitenflächen des Gliedkörpers im Querschnitt wellenartige Mulden vorgesehen sind, die von der bodenseitigen Aufstandsfläche des Gliedkörpers ausgehen. Bei diesem bekannten Stegglied wird eine relativ große Oberfläche und damit auch eine hohe Verschleißbeständigkeit erreicht, die Griffigkeit dieser Glieder ist jedoch nicht sehr groß, zumal sich die entlang der Längsmittelachse des Gliedkörpers angebrachten Vertiefungen bei Betrieb sehr rasch zusetzen und dann kaum mehr zur Griffigkeit des Gliedes beitragen können.

Demgegenüber weist ein anderes bekanntes Stegglied der eingangs genannten Art, wie es aus der DE-B-17 80 717 bekannt ist, eine erheblich verbesserte Griffigkeit auf, da hier zwischen den einzelnen Profilerhebungen in der bodenseitigen Aufstandsfläche des Gliedkörpers über die Breite des Steggliedes hinweg durchgehende Querkanäle verlaufen, die seitlich durch nach außen hin divergierende, schräge Seitenflanken benachbarter Profilerhebungen begrenzt werden. Durch die beidseitig offenen Zwischenräume zwischen den Profilerhebungen wird deren Zusetzen durch das Material des Untergrundes erschwert und damit die Griffigkeit verbessert. Die seitlichen wellenförmigen Mulden verbessern zudem bei einem leichten Verkanten der Stegglieder die Griffigkeit in Bezug auf den Untergrund, da hier die seitlichen Profilierungen wirksam werden und die Griffigkeit gegenüber dem Untergrund aufrechterhalten können. Da die Profilerhebungen an ihren Spitzen jedoch nur relativ kleine Anlage- bzw. Abstützflächen gegenüber dem Untergrund ausbilden, weist das bekannte Stegglied auch nur eine vergleichsweise kleine bodenseitige Aufstandsfläche auf, was zu einem relativ raschen Verschleiß führt.

Ausgehend hiervon liegt der Erfindung die Aufgabe zugrunde, ein Stegglied der eingangs genannten Art so zu verbessern, daß seine Verschleißbeständigkeit deutlich erhöht und gleichzeitig seine Griffigkeit zum Untergrund, auch bei einer deutlichen seitlichen Verkantung des Steggliedes, verbessert wird.

Erfindungsgemäß wird dies bei einem Stegglied der eingangs genannten Art dadurch erreicht, daß die Profilerhebungen, im Querschnitt in Längsrichtung des Steggliedes gesehen, als unmittelbar aneinander anschließende Dreiecke ausgebildet sind, deren Fußpunkte und deren Spitzen jeweils in einer gemeinsamen Ebene liegen und die sich im wesentlichen über die gesamte Breite der Deckfläche des Stegglieds erstrecken, und daß an beiden Längsseiten des Gliedkörpers zumindest in einem mittleren Längsbereich desselben ebenfalls hintereinanderliegende, im Querschnitt dreieckige, von der jeweiligen Seitenfläche des Gliedkörpers nach außen ragende seitliche Vorsprünge gleicher Höhe ausgebildet sind, die im wesentlichen 90° zu den Profilerhebungen versetzt angeordnet sind und deren oben liegende seitliche Abschlußflächen in einer Ebene liegen, die in Höhe der gemeinsamen Ebene der Fußpunkte oder etwas unter dieser verläuft.

Das erfindungsgemäße Stegglied weist infolge seiner im Querschnitt dreieckförmig ausgebildeten Profilvorsprünge eine vorzügliche Griffigkeit auf, da sich solchermaßen ausgebildete Vorsprünge besonders gut im Boden verhaken können, sei es nun beim Einsatz von Baustellenfahrzeugen ein Baustellenboden oder beim Einsatz von Geländefahrzeugen ein üblicher Geländeboden. Dadurch, daß die Profilerhebungen unmittelbar aneinander anschließen, wird, wenn man die Höhe der Profilerhebungen vorgibt, sichergestellt, daß über die Länge des Steggliedes hinweg eine maximale Anzahl von Profilerhebungen vorliegt. Weil die Spitzen aller Profilerhebungen in einer gemeinsamen Ebene liegen, ist zudem sichergestellt, daß bei im wesentlichen senkrechter Auflage auf einem Boden die Spitzen aller Profilerhebungen gleichzeitig mit dem Boden in Wirkkontakt treten können. Schließlich wird durch die Erstreckung der Profilerhebungen (und damit auch deren Spitzen) im wesentlichen über die gesamte Breite der Deckfläche des Steckgliedes sichergestellt, daß die Verhakungswirkung aller Profilerhebungen am Boden jeweils über die gesamte Breite des Steggliedes hinweg auftritt. Ferner wird durch die erfindungsgemäße Anordnung zusätzlicher, seitlich vorragender Vorsprünge an beiden Längsseiten des Gliedkörpers die Möglichkeit geschaffen, daß ab einem gewissen seitlichen Verschwenkungswinkel des Steggliedes diese seitlichen Vorsprünge im Eingriff mit dem Boden der Unterlage gelangen können, wobei sich dieser Effekt mit zunehmendem Verkantungswinkel sogar noch verstärkt. Dadurch wird sichergestellt, daß auch bei einem stärker verkanteten Stegglied stets eine sehr gute Griffigkeit zum Boden aufrechterhalten bleibt, wobei durch die erfindungsgemäße Anordnung dieser seitlichen Vorsprünge, deren obere seitliche Abschlußflächen in einer Ebene liegen, die in Höhe der gemeinsamen Ebene der Fußpunkte der Profilerhebungen oder etwas unter dieser verläuft, erreicht wird, daß die seitlichen Vorsprünge auch bei einer relativ starken seitlichen Verkantung noch gut greifen. Schließlich tritt auch noch der Vorteil auf, daß sich mit wachsendem (unverhinderbarem) Verschleiß die Größe der Verschleißfläche in der bodenseitigen Aufstandsfläche sogar noch vergrößert.

In bevorzugter Ausgestaltung der Erfindung werden die Spitzen der Profilerhebungen und/oder die Spitzen der seitlichen Vorsprünge abgerundet ausgebildet.

Die Profilerhebungen und/oder die seitlichen Vorsprünge können in unterschiedlichen Größen und Formen ausgebildet sein. Es ist jedoch ganz besonders vorteilhaft, wenn die Profilerhebungen und/oder die seitlichen Vorsprünge jeweils gleich groß und von gleicher geometrischer Formgebung sind, wobei dennoch durchaus die Profilerhebungen z.B. einen anderen spitzen Winkel als die seitlichen Vorsprünge aufweisen können.

Die Profilerhebungen können auf dem Gliedkörper in verschiedenerlei Ausrichtung angebracht werden. Besonders bevorzugt werden sie jedoch senkrecht oder schräg zur Längsachse des Gliedkörpers angeordnet, wobei es sich empfiehlt, daß jeweils alle Profilerhebungen entweder senkrecht oder schräg zur Längsachse liegen.

Eine weiter bevorzugte Ausgestaltung des erfindungsgemäßen Steggliedes besteht auch darin, daß die Querschnitte der Profilerhebungen und/oder der Vorsprünge in Form gleichschenkeliger Dreiecke ausgebildet sind.

Vorzugsweise sind ferner zwischen den einander zugewandten Seitenflanschen mindestens zwei aufeinanderfolgender Profilerhebungen Zwischenerhebungen vorgesehen, deren Spitzen ebenfalls in der gemeinsamen Ebene wie die Spitzen der Profilerhebungen liegen und die kürzer als die Profilerhebungen sind. Dadurch wird nochmals eine Erhöhung der Griffigkeit des erfindungsgemäßen Steggliedes gewährleistet. Diese Zwischenerhebungen können dabei in unterschiedlicher Anordnung angebracht sein. Besonders bevorzugt werden sie jedoch entweder im Mittelbereich der Profilerhebungen vorgesehen oder sie erstrecken sich von jeweils einer Seite des Gliedkörpers aus. In einer anderen vorteilhaften Ausbildung können die Zwischenerhebungen auch abwechselnd von den beiden Seiten des Gliedkörpers aus verlaufend angebracht sein.

Es ist besonders empfehlenswert, wenn die Zwischenerhebungen, im Querschnitt in Längsrichtung des Steggliedes gesehen, nach oben hin dreieckförmig mit einem Spitzenwinkel zulaufen, der gleich dem Spitzenwinkel der Profilerhebungen oder kleiner als dieser ist.

Vorzugsweise beträgt die Längserstreckung der Zwischenerhebungen nur etwa 20% bis 80%, bevorzugt 40% bis 70%, ganz besonders bevorzugt jedoch 50% der Längserstreckung der Profilerhebungen.

In weiterer vorzugsweiser Ausgestaltung der Erfindung wird die Höhe der Profilerhebungen so gewählt, daß sie 15% bis 25%, bevorzugt aber 20%, der Gesamthöhe des Gliedkörpers beträgt.

Die Zuordnung der seitlichen Vorsprünge in ihrer Lage relativ zu den Profilerhebungen kann in jeder geeigneten Weise vorgenommen werden. Es hat sich jedoch gezeigt, daß vorteilhafterweise die Lage der Spitzen der Profilerhebungen in Längsrichtung des Gleitkörpers zur Lage der Spitzen der seitlichen Vorsprünge versetzt sind, was die Griffigkeit des erfindungsgemäßen Steggliedes bei einer Verkantung, bei der die seitlichen Vorsprünge in Eingriff mit der Unterlage treten können, begünstigt.

Die Erfindung wird nachfolgend anhand der Zeichnungen im Prinzip beispielshalber noch näher erläutert. Es zeigen:
Fig. 1 eine schräge Perspektivansicht (von vorne oben) auf ein erfindungsgemäßes Stegglied;
Fig. 2 eine Vorderansicht des Steggliedes aus Fig. 1;
Fig. 3 eine Draufsicht auf das Stegglied aus Fig. 1;
Fig. 4 eine perspektivische Schrägansicht einer zweiten Ausführungsform eines erfindungsgemäßen Steggliedes mit Zwischenerhebungen;
Fig. 5 eine weitere Ausführungsform eines erfindungsgemäßen Steggliedes mit Zwischenerhebungen;
Fig. 6 eine dritte Ausführungsform eines erfindungsgemäßen Steggliedes mit Zwischenerhebungen;
Fig. 7 eine weitere Ausführungsform eines erfindungsgemäßen Steggliedes mit schräg zu seiner Längsachse angeordneten Profilerhebungen;
Fig. 8 eine weitere Ausführungsform eines erfindungsgemäßen Steggliedes mit an seiner Oberseite schräg zur Längsachse verlaufenden Profilerhebungen und mit Zwischenerhebungen, sowie
Fig. 9 eine prinzipielle Vorderansicht (in Längsrichtung gesehen) eines erfindungsgemäßen Steggliedes zur Darstellung der Eingreifverhältnisse der seitlichen Vorsprünge bei Verkantung.

In der nachstehenden Figurenbeschreibung sind in den verschiedenen Figuren für Teile, in in ihrer Funktion gleich sind, auch jeweils dieselben Bezugszeichen verwendet.

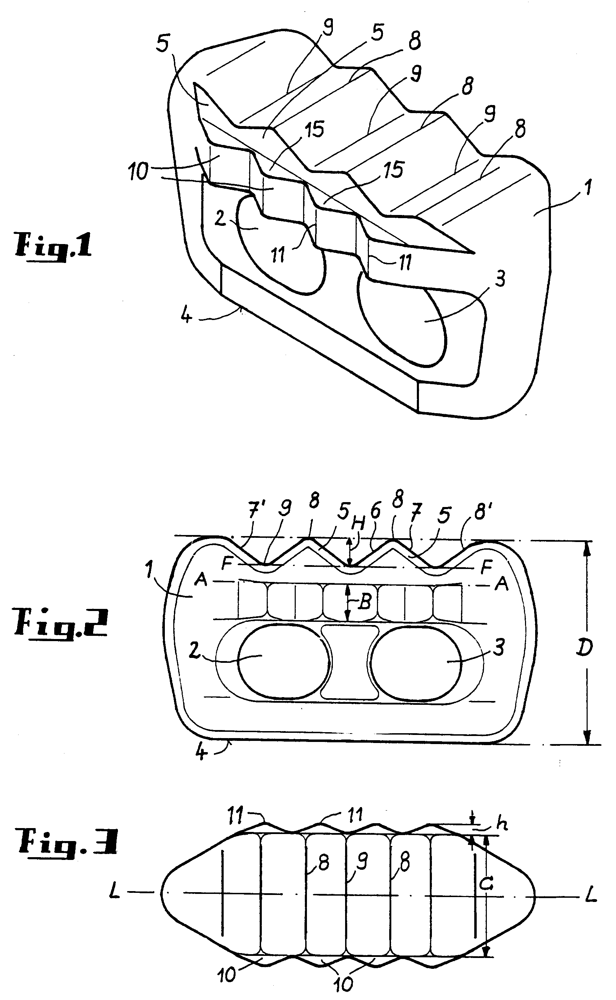

Fig. 1 zeigt ein Stegglied, wie es für Reifenschutzketten eingesetzt wird, die im schweren Lastbetrieb auf festeren Böden z.B. als Baustellenfahrzeuge, bei Arbeiten im Gelände o.ä. eingesetzt sind.

Der Gliedkörper 1 ist mit zwei Aufnahmeöffnungen 2, 3 versehen, die zum Anschluß von (nicht gezeigten) Verbindungsgliedern dienen.

Der Gliedkörper 1 ist ferner an seiner Unterseite (entsprechend den Darstellungen in den Figuren) mit einer Reifenanlagefläche 4 versehen, während er an seiner dieser gegenüberliegenden Oberseite, die beim Einsatz der Kette mit dem Boden bzw. der Unterlage in Eingriff kommt (bodenseitige Aufstandsfläche), eine Mehrzahl von nach oben vorspringenden Profilerhebungen 5 trägt. Diese Profilerhebungen 5 sind, wie Fig. 3 zeigt, senkrecht zur Längsachse L-L des Gliedkörpers 1 ausgerichtet und erstrecken sich, wie aus den Fig. 1 und 3 ersichtlich ist, über die gesamte Breite der Oberseite des Gliedkörpers 1. Alle Profilerhebungen 5 weisen zudem eine gleiche Höhe H auf und sind im Querschnitt dreieckförmig ausgebildet, wobei die Spitze des Dreiecks abgerundet ist. Die Form der Dreiecke ist so, daß die Seitenflanken jeder Profilerhebung 5 gleich lang sind, d.h. die Dreiecksform des Querschnitts ist gleichschenkelig. Die Profilerhebungen 5 weisen alle eine gleiche Dreiecksform auf (ausgenommen die erste und die letzte Profilerhebung, die an ihrem vorderen bzw. hinteren Abschnitt das vordere bzw. hintere Ende des Steggliedes darstellen und in dieser Hälfte ihres Querschnitts eine andere Formgebung haben).

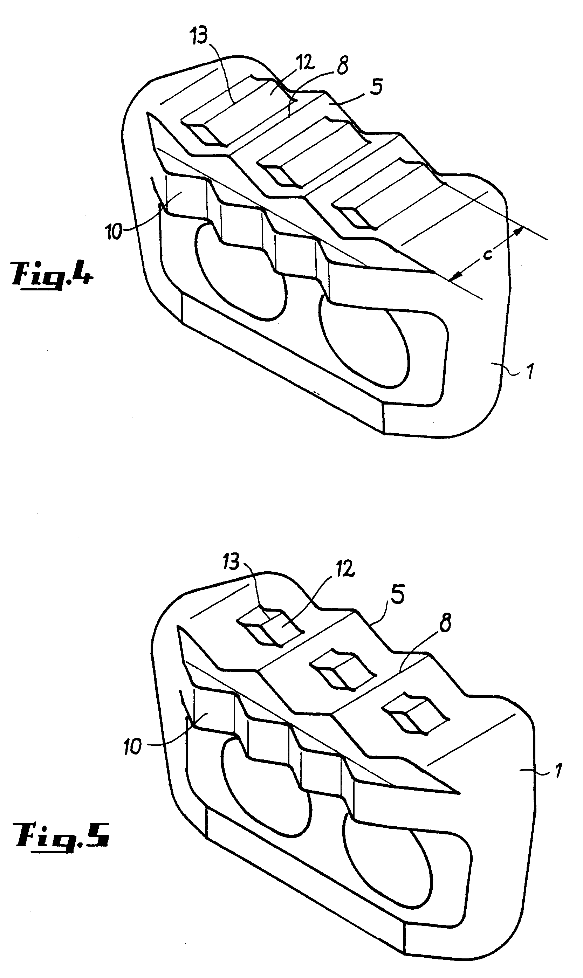

Wie aus Fig. 2 ersichtlich ist, liegen die Spitzen 8 aller Profilerhebungen 5 in einer zur Ebene der Reifenanlagefläche 4 parallelen Ebene E-E.

Wie sich insbesondere aus Fig. 1 entnehmen läßt, werden also auf der Oberseite des Gliedkörpers 1 im Querschnitt dreieckförmige, dachartige, sich über die gesamte Breite des Steggliedes erstreckende Vorsprünge 5 gebildet.

Wie Fig. 1 und Fig. 2 zeigen, liegen die Profilerhebungen 5 so, daß sich im Querschnitt ihre Dreiecke unmittelbar aneinander anschließen, so daß zwischen zwei aufeinanderfolgenden Profilerhebungen 5 eine Mulde entsteht, die im Querschnitt ebenfalls dreieckförmig ist, wobei hier das Dreieck jedoch auf seinem Kopf steht. Die Fußpunkte 9 dieser Mulden zwischen zwei aufeinanderfolgenden Profilerhebungen 5 liegen ebenfalls auf einer gemeinsamen Fußebene F-F (Fig. 2), die parallel zur Ebene E-E bzw. zur Reifenanlagefläche 4 des Gliedkörpers 1 ist.

Etwas unterhalb dieser Fußebene F-F sind in Längsrichtung des Gliedkörpers 1 innerhalb eines mittleren Bereiches, der sich etwa von der Hälfte der ersten schrägen Seitenflanke 7' der vordersten Profilerhebung 5 bei zur Hälfte der letzten schrägen Seitenflanke 8' der hintersten Profilerhebung 5 erstreckt, jeweils seitlich vorspringende, im Querschnitt ebenfalls dreieckförmige Vorsprünge 10 angeordnet (Fig. 1 und 3). Auch diese seitlichen Vorsprünge 10 beidseits des Gliedkörpers 1 liegen in Längsrichtung desselben unmittelbar hintereinander und die Querschnitte aller Vorsprünge 10 auf beiden Seiten des Gliedkörpers sind gleich große, gleichschenkelige Dreiecke.

Die seitlichen Vorsprünge 10 liegen um etwa 90° relativ zu den Vorsprüngen 5 versetzt angeordnet, d.h. sie erstrecken sich im wesentlichen "von oben nach unten" und weisen dabei eine Erstreckung B (Fig. 2) auf, die kleiner als die Längserstreckung C (Fig. 3) der Profilerhebungen 5 ist.

Auf beiden Seiten des Gliedkörpers 1 liegen die oberen Endflächen der seitlichen Vorsprünge 10 in einer Ebene A-A, die etwas unterhalb der Ebene F-F der Fußpunkte der Profilerhebungen 5 angeordnet ist. Es bestünde auch die Möglichkeit, die Ebene A-A so anzuordnen, daß sie in die Ebene F-F fällt. Bei der in den Fig. 1 bis 3 gezeigten Ausführungsform ist hier jedoch ein Versatz von 4,5 mm nach unten, d.h. in Richtung auf die Reifenanlagefläche 4 des Gliedkörpers 1 hin, vorgesehen.

Wie insbesondere aus den Fig. 2 und 3 entnommen werden kann, sind die Öffnungswinkel der seitlichen Vorsprünge 10 an ihren Spitzen 11 größer als die Öffnungswinkel an den Spitzen 8 der Dreiecke der Profilerhebungen 5. Die Spitzen 11 der seitlichen Vorsprünge 10 sind zudem, wie aus Fig. 3 entnehmbar, in Längsrichtung des Gliedkörpers 1 gesehen relativ zur Lage der Spitzen 8 der Profilerhebungen 5 versetzt angeordnet, wobei die Spitzen der Querschnittsdreiecke der seitlichen Vorsprünge 10 ebenfalls abgerundet sind.

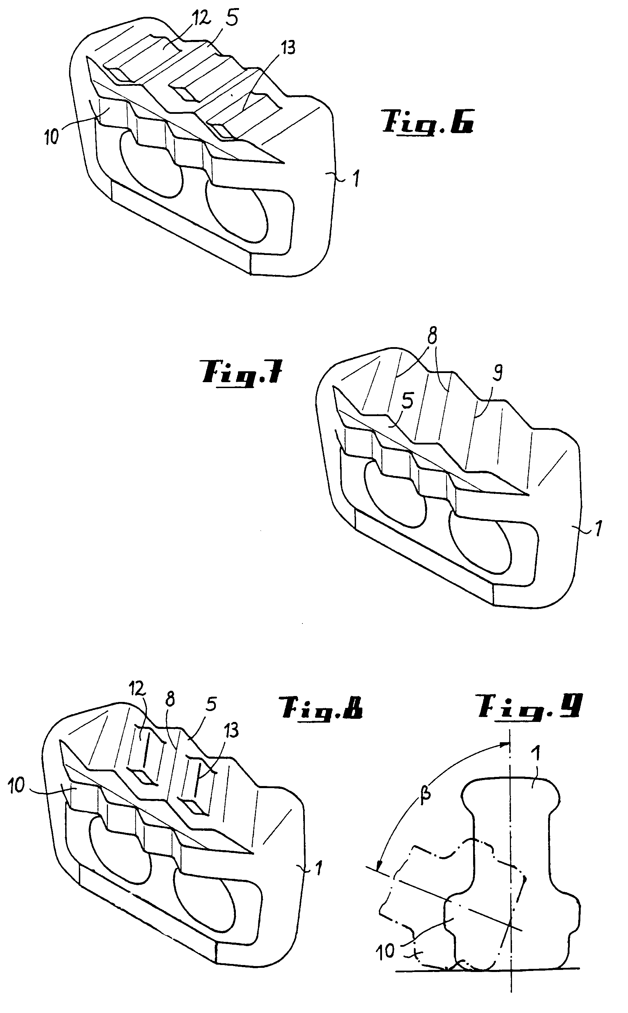

In den Fig. 4, 5 und 6 sind perspektivische Darstellungen (schräg von vorne oben gesehen) dreier weiterer Ausführungsbeispiele von Steggliedern gezeigt, bei denen in der zwischen zwei aufeinanderfolgenden Profilerhebungen 5 gebildeten Mulde Zwischenerhebungen 13 (kleinerer Höhe als die Profilerhebungen 5) angebracht sind. Die Zwischenerhebungen 13 weisen dabei jeweils eine quer zur Längsachse des Steggliedes gerichtete Längserstreckung **c** auf, die kleiner als die volle Breite der Oberseite des Steggliedes und damit auch kleiner als die Längserstreckung **C** der Profilerhebungen 5 ist. Bei der Ausgestaltung nach Fig. 4 erstrecken sich die Zwischenerhebungen 12 über eine Länge **c**, die etwa 80% der Länge **C** der Profilerhebungen 5 beträgt, und sind mittig zu diesen angeordnet. Fig. 5 zeigt ein Ausführungsbeispiel, bei dem die Zwischenerhebungen 12 eine Erstreckung von nur etwa 20% der Erstreckung **C** der Profilerhebungen 5 haben. Die Anordnung der Zwischenerhebungen 12 ist bei den Ausführungsbeispielen der Fig. 4 und 5 jeweils mittig (in Querrichtung des Gliedkörpers gesehen).

Fig. 6 zeigt eine nicht-mittige Anordnung der Zwischenerhebungen 12, die hier nacheinander abwechselnd von den beiden Längsseiten des Gliedkörpers 1 aus verlaufen. Bei der Darstellung nach Fig. 6 sind drei Zwischenerhebungen 12 vorgesehen, wobei die erste und die letzte von der in der zeichnerischen Darstellung linken Längsseite des Gliedkörpers 1 ausgehen, während die mittlere Zwischenerhebung 12 sich von der gegenüberliegenden (rechten) Längsseite des Gliedkörpers 1 aus erstreckt. Wiederum ist die Längserstreckung der Zwischenerhebungen 12 in einer Größenordnung von etwa 80% der Gesamterstreckung der Profilerhebungen 5.

In Fig. 7 und 8 sind zwei weitere Ausführungsformen eines Steggliedes gezeigt, bei denen die Profilerhebungen 5 nicht mehr rechtwinkelig, sondern schräg zur Längsachse des Steggliedes verlaufen. Dabei zeigt Fig. 7 ein ansonsten der Darstellung der Fig. 1 entsprechendes Ausführungsbeispiel des Steggliedes, während Fig. 8 das in Fig. 7 dargestellte Ausführungsbeispiel mit Zwischenerhebungen 12 zeigt, die hier wiederum mittig angeordnet sind. Bei den Darstellungen der Fig. 4 bis 6 und 8 liegen die Spitzenkanten 13 der Zwischenerhebungen 12 in derselben Ebene, in der auch die Spitzen 8 der Profilerhebungen 5 liegen.

Fig. 9 zeigt in einer rein schematischen Darstellung eine Ansicht (in Längsrichtung gesehen) des Steggliedes nach Fig. 1, und zwar in einer senkrechten und in einer um den Winkel β verkanteten Lage, wobei ersichtlich ist, daß in letzterer die seitlichen Vorsprünge 10 ebenfalls in Eingriffskontakt mit der Unterlage 20 (etwa einem Waldboden oder einem Baustellenboden) gelangen. Aus Fig. 9 ist entnehmbar, daß hier eine gute Griffigkeit noch bei einer relativ großen seitlichen Verkantung β eintritt, wobei solche relativ großen Verkantungen durchaus auch im Verbund einer aufgezogenen Kette unter ungünstigen Lastbedingungen eintreten können.

Die Höhe H der Profilerhebungen 5 kann so gewählt werden, wie dies für den spezifischen Einsatzfall gewünscht wird. Vorzugsweise wird sie jedoch nicht größer als 25% der Gesamthöhe D des Gliedkörpers 1 gewählt, wobei sie in den meisten Fällen besonders bevorzugt bei 20% der Gesamthöhe D liegt.

## Patentansprüche

1. Stegglied für Reifenketten, mit einem Gliedkörper, der mindestens eine Aufnahmeöffnung zum Anschluß von Verbindungsgliedern aufweist und auf seiner der Reifenanlagefläche abgewandten Seite mit in Längsrichtung des Steggliedes hintereinanderliegenden Profilerhebungen versehen ist, die an ihren einander zugewandten Seiten jeweils von einer quer zur Längsrichtung des Steggliedes ausgerichteten schrägen Flankenfläche begrenzt werden, wobei die Flankenflächen einander zugewandter Seiten aufeinanderfolgender Profilerhebungen jeweils in Richtung von der Reifenanlagefläche weg divergieren, **dadurch gekennzeichnet**, daß die Profilerhebungen (5), im Querschnitt in Längsrichtung des Gliedkörpers (1) gesehen, als unmittelbar aneinander anschließende Dreiecke ausgebildet sind, deren Spitzen (8) und Fußpunkte (9) jeweils in einer gemeinsamen Ebene (E-E; F-F) liegen und die sich im wesentlichen über die gesamte Breite (C) der Deckfläche des Gliedkörpers (1) erstrecken, und daß an beiden Längsseiten des Gliedkörpers (1) zumindest in einem mittleren Längsbereich desselben ebenfalls hintereinanderliegende, im Querschnitt dreieckige, von der jeweiligen Seitenfläche des Gliedkörpers (1) nach außen ragende seitliche Vorsprünge (10) mit untereinander gleicher Höhe (h) ausgebildet sind, die im wesentlichen um 90° zu den Profilerhebungen (5) versetzt angeordnet sind und deren oben liegende seitliche Abschlußflächen (15) in einer Ebene (A-A) liegen, die in Höhe der gemeinsamen Ebene (F-F) der Fußpunkte (9) der Profilerhebungen (5) oder etwas unter dieser verläuft.

2. Stegglied nach Anspruch 1, dadurch gekennzeichnet, daß die Spitzen (8) der Profilerhebungen (5) und/oder die Spitzen (11) der seitlichen Vorsprünge (10) im Querschnitt abgerundet sind.

3. Stegglied nach Anspruch 1 oder 2, dadurch gekennzeichnet, daß die Profilerhebungen (5) gleich groß sind.

4. Stegglied nach Anspruch 3, dadurch gekennzeichnet, daß die Profilerhebungen (5) und/oder die Vorsprünge (10) jeweils von gleicher Formgebung sind.

5. Stegglied nach einem der Ansprüche 1 bis 4, dadurch gekennzeichnet, daß die Profilerhebungen (5) senkrecht zur Längsachse (L-L) des Gliedkörpers (1) angeordnet sind.

6. Stegglied nach einem der Ansprüche 1 bis 4, dadurch gekennzeichnet, daß die Profilerhebungen (5) schräg zur Längsachse (L-L) des Gliedkörpers (1) angeordnet sind.

7. Stegglied nach einem der Ansprüche 1 bis 6, dadurch gekennzeichnet, daß die Querschnitte der Profilerhebungen (5) und/oder der Vorsprünge (10) gleichschenkelige Dreiecke sind.

8. Stegglied nach einem der Ansprüche 1 bis 7, dadurch gekennzeichnet, daß zwischen den einander zugewandten Seitenflanken (6, 7) mindestens zweier aufeinanderfolgender Profilerhebungen (5) Zwischenerhebungen (12) angebracht sind, deren obere Spitzen (13) ebenfalls in der gemeinsamen Ebene (E-E) der Spitzen (8) der Profilerhebungen (5) liegen und die kürzer als die Profilerhebungen (5) sind.

9. Stegglied nach Anspruch 8, dadurch gekennzeichnet, daß die Zwischenerhebungen (12) im Mittelbereich der Erstreckung (C) der Profilerhebungen (5) vorgesehen sind.

10. Stegglied nach Anspruch 8, dadurch gekennzeichnet, daß sich die Zwischenerhebungen (12) von einer Seite des Gliedkörpers (1) aus erstrecken.

11. Stegglied nach Anspruch 8, dadurch gekennzeichnet, daß die Zwischenerhebungen (12) abwechselnd von den beiden Seiten des Gliedkörpers (1) aus verlaufend angebracht sind.

12. Stegglied nach einem der Ansprüche 8 bis 11, dadurch gekennzeichnet, daß die Zwischenerhebungen (12), im Querschnitt in Längsrichtung des Gliedkörpers (1) gesehen, nach oben hin dreieckförmig mit einem Spitzenwinkel zulaufen, der gleich dem oder kleiner als der Spitzenwinkel der Profilerhebungen (5) ist.

13. Stegglied nach einem der Ansprüche 8 bis 12, dadurch gekennzeichnet, daß die Längserstreckung (c) der Zwischenerhebungen (12) nur etwa 20% bis 80%, bevorzugt 40% bis 70%, besonders bevorzugt 50%, der Längserstreckung (C) der Profilerhebungen (5) beträgt.

14. Stegglied nach einem der Ansprüche 1 bis 13, dadurch gekennzeichnet, daß die Höhe (H) der Profilerhebungen (5) 15% bis 25%, bevorzugt 20%, der Gesamthöhe (D) des Gliedkörpers (1) beträgt.

15. Stegglied nach einem der Ansprüche 8 bis 14, dadurch gekennzeichnet, daß die Lage der Spitzen (8) der Profilerhebungen (5) in Längsrichtung des Gliedkörpers (1) zur Lage der Spitzen (11) der seitlichen Vorsprünge (10) versetzt ist.

## Claims

1. Stud link for tyre chains, comprising a link body having at least one locating opening for the connection of connecting links and provided on its side remote from the tyre bearing surface with profiled elevations situated one behind the other in the longitudinal direction of the stud link and delimited at their sides directed towards one another by an oblique flank surface aligned transversely to the longitudinal direction of the stud link, the flank surfaces of sides of successive profiled elevations directed towards one another diverging away from the tyre bearing surface, characterised in that, when viewed in cross section in the longitudinal direction of the link body (1), the profiled elevations (5) are in the form of immediately adjacent triangles, the vertices (8) and bases (9) of which are situated in one common plane (E-E; F-F) and extend substantially over the entire width (C) of the upper surface of the link body (1), and that lateral projections (10) of identical height (h) having a triangular cross section also situated one behind the other are formed on both longitudinal sides of the link body (1) at least in a central longitudinal region thereof so that they project outwardly from the respective side surfaces of the link body (1), said projections being arranged so that they are offset by substantially 90° relative to the profiled elevations (5) and their top lateral end surfaces (15) being situated in a plane (A-A) extending level with or slightly below the common plane (F-F) of the bases (9) of the profiled elevations (5).

2. Stud link according to claim 1, characterised in that the vertices (8) of the profiled elevations (5) and/or the vertices (11) of the lateral projections (10) have a rounded cross section.

3. Stud link according to claim 1 or claim 2, characterised in that the profiled elevations (5) are of identical size.

4. Stud link according to claim 3, characterised in that the profiled elevations (5) and/or the projections (10) are each of identical shape.

5. Stud link according to one of claims 1 to 4, characterised in that the profiled elevations (5) are arranged perpendicularly to the longitudinal axis (L-L) of the link body (1).

6. Stud link according to one of claims 1 to 4, characterised in that the profiled elevations (5) are arranged obliquely relative to the longitudinal axis (L-L) of the link body (1).

7. Stud link according to one of claims 1 to 6, characterised in that the cross sections of the profiled elevations (5) and/or the projections (10) are isosceles triangles.

8. Stud link according to one of claims 1 to 7, characterised in that intermediate elevations (12) are fitted between the side flanks (6, 7) of at least two successive profiled elevations (5) directed towards one another, the upper vertices (13) of which are also situated in the common plane (E-E) of the vertices (8) of the profiled elevations (5) and are shorter than the profiled elevations (5).

9. Stud link according to claim 8, characterised in that the intermediate elevations (12) are provided in the central region of the extent (C) of the profiled elevations (5).

10. Stud link according to claim 8, characterised in that the intermediate elevations (12) extend from one side of the link body (1).

11. Stud link according to claim 8, characterised in that the intermediate elevations (12) are fitted so that they extend alternately from either side of the link body (1).

12. Stud link according to one of claims 8 to 11, characterised in that, when viewed in cross section in the longitudinal direction of the link body (1), the intermediate elevations (12) extend upwards in a triangle with a vertex angle which is smaller than or equal to the vertex angle of the profiled elevations (5).

13. Stud link according to one of claims 8 to 12, characterised in that the longitudinal extent (c) of the intermediate elevations (12) is only approximately 20 % to 80 %, preferably 40 % to 70 %, particularly preferably 50 %, of the longitudinal extent (C) of the profiled elevations (5).

14. Stud link according to one of claims 1 to 13, characterised in that the height (H) of the profiled elevations (5) is 15 % to 25 %, preferably 20 %, of the total height (D) of the link body (1).

15. Stud link according to one of claims 8 to 14, characterised in that the position of the vertices (8) of the profiled elevations (5) in the longitudinal direction of the link body (1) is offset relative to the position of the vertices (11) of the lateral projections (10).

## Revendications

1. Maillon à étai pour chaînes de pneu, comprenant un corps de maillon qui comporte au moins une ouverture pour le raccordement d'éléments de jonction et qui est pourvu, sur son côté opposé à la surface d'appui du pneu, de reliefs profilés disposés l'un après l'autre suivant le sens longitudinal du maillon à étai, qui sont limités sur leurs côtés se faisant face par respectivement une surface latérale oblique orientée perpendiculairement par rapport au sens longitudinal du maillon à étai, les surfaces latérales de côtés se faisant face des reliefs profilés successifs s'écartant à chaque fois à partir de la surface d'appui du pneu, caractérisé en ce que les reliefs profilés (5), vus en coupe transversale suivant le sens longitudinal du corps de maillon (1), sont réalisés sous forme de triangles directement contigus dont les sommets (8) et les bases (9) sont situés respectivement dans un même plan (E-E ; F-F) et qui s'étendent essentiellement sur toute la largeur (C) de la surface de recouvrement du corps de maillon (1), et en ce que des saillies latérales (10) de hauteur (h) identique, disposées elles aussi l'une après l'autre, de section triangulaire et saillant vers l'extérieur depuis la face latérale respective du corps de maillon (1), sont formées sur les deux côtés longitudinaux du corps de maillon (1), au moins dans une zone longitudinale au centre de celui-ci, qui sont décalées par rapport aux reliefs profilés (5), essentiellement de l'ordre de 90°, et dont les surfaces de délimitation latérales (15) situées en haut se trouvent dans un plan (A-A) qui s'étend au niveau du plan commun (F-F) des bases (9) des reliefs profilés (5) ou légèrement au-dessous de celui-ci.

2. Maillon à étai selon la revendication 1, caractérisé en ce que les sommets (8) des reliefs profilés (5) et/ou les sommets (11) des saillies latérales (10) sont de section arrondie.

3. Maillon à étai selon la revendication 1 ou 2, caractérisé en ce que les reliefs profilés (5) sont de taille identique.

4. Maillon à étai selon la revendication 3, caractérisé en ce que les reliefs profilés (5) et/ou les saillies (10) sont à chaque fois de forme identique.

5. Maillon à étai selon l'une des revendications 1 à 4, caractérisé en ce que les reliefs profilés (5) sont disposés verticalement par rapport à l'axe longitudinal (L-L) du corps de maillon (1).

6. Maillon à étai selon l'une des revendications 1 à 4, caractérisé en ce que les reliefs profilés (5) sont disposés obliquement par rapport à l'axe longitudinal (L-L) du corps de maillon (1).

7. Maillon à étai selon l'une des revendications 1 à 6, caractérisé en ce que les sections des reliefs profilés (5) et/ou des saillies (10) sont des triangles isocèles.

8. Maillon à étai selon l'une des revendications 1 à 7, caractérisé en ce que des reliefs intermédiaires (12) sont placés entre les flancs latéraux (6, 7) se faisant face d'au moins deux reliefs profilés (5) successifs, dont les sommets supérieurs (13) se trouvent eux aussi dans le plan commun (E-E) des sommets (8) des reliefs profilés (5) et qui sont plus courts que les reliefs profilés (5).

9. Maillon à étai selon la revendication 8, caractérisé en ce que les reliefs intermédiaires (12) sont prévus dans la partie centrale de l'extension (C) des reliefs profilés (5).

10. Maillon à étai selon la revendication 8, caractérisé en ce que les reliefs intermédiaires (12) s'étendent depuis un côté du corps de maillon (1).

11. Maillon à étai selon la revendication 8, caractérisé en ce que les reliefs intermédiaires (12) s'étendent alternativement depuis les deux côtés du corps de maillon (1).

12. Maillon à étai selon l'une des revendications 8 à 11, caractérisé en ce que les reliefs intermédiaires (12), vus en coupe transversale suivant le sens longitudinal du corps de maillon (1), se terminent en haut en forme de triangle, dont l'angle de sommet est inférieur ou égal à l'angle de sommet des reliefs profilés (5).

13. Maillon à étai selon l'une des revendications 8 à 12, caractérisé en ce que l'extension longitudinale (c) des reliefs intermédiaires (12) ne représente qu'environ 20 à 80 %, de préférence 40 à 70 %, et selon une préférence particulière 50 % de l'extension longitudinale (C) des reliefs profilés (5).

14. Maillon à étai selon l'une des revendications 1 à 13, caractérisé en ce que la hauteur (H) des reliefs profilés (5) représente 15 à 25 %, de préférence 20%, de la hauteur totale (D) du corps de maillon (1).

15. Maillon à étai selon l'une des revendications 8 à 14, caractérisé en ce que la position des sommets (8) des reliefs profilés (5) suivant le sens longitudinal du corps de maillon (1) est décalée par rapport à la position des sommets (11) des saillies latérales (10).
